Europäisches Patentamt

European Patent Office

Office européen des brevets

(11) Publication number: **0 328 854 B1**

# EUROPEAN PATENT SPECIFICATION

(45) Date of publication of patent specification: **19.05.93**   (51) Int. Cl.5: **H04L 12/54**, H04L 12/58, G06F 15/16, H04Q 3/68

(21) Application number: **88830569.5**

(22) Date of filing: **28.12.88**

(54) NxN interconnection networks formed of delta networks and method for the establishment of inlet–outlet permutations.

(30) Priority: **18.02.88 IT 4764888**

(43) Date of publication of application:
**23.08.89 Bulletin 89/34**

(45) Publication of the grant of the patent:
**19.05.93 Bulletin 93/20**

(84) Designated Contracting States:
**AT BE CH DE ES FR GB GR LI LU NL SE**

(56) References cited:

**PROCEEDINGS OF THE 1985 INTERNATION-
AL CONFERENCE ON PARALLEL PROCESS-
ING, 20th–23rd August 1985, University Park,
Pennsylvania, pages 328–333, IEEE, New
York, US; A. VARMA et al.: "Realization of
permutations on generalized INDRA net-
works"**

**PROCEEDINGS OF THE 1983 INTERNATION-
AL CONFERENCE ON PARALLEL PROCESS-
ING, 23rd–26th August 1983, pages 10–18,
IEEE, New York, US; M. KUMAR et al.:
"Generalized delta networks"**

(73) Proprietor: **FONDAZIONE UGO BORDONI
Via Baldassarre Castiglione 59
I–00142 Roma(IT)**

(72) Inventor: **Bernabei, Francesco
Via Tuscolana 874
Roma(IT)**
Inventor: **Listanti, Marco
via Servilio Prisco, 1
Roma(IT)**

(74) Representative: **Fiammenghi–Domenighetti,
Delfina et al
Fiammenghi–Fiammenghi Via Ouattro Fon-
tane 31
I–00184 Roma (IT)**

## Description

This invention relates to a new class of NxN multi−stage interconnection networks. For such a class of networks the non−blocking and/or rearrangeable features have been defined and a method is provided which allows any point−to−point connection request to be efficiently established. As non−blocking property it is defined the capability of a network to establish, whichever the state thereof may be, any inlet−outlet connection. If the establishment of such a connection requires the variation of some already set−up paths concerning other operative connections a rerouting is provided and the network is referred to be rearrangeable.

In the last years Delta networks, due to their self−routing property, have raised a large interest both in parallel computing environment and in designing new switching architectures (see IEEE Computer Magazine Special Issue on "Interconnection Networks", December 1983). In both environments the non−blocking or rearrangeable features are of paramount importance to efficiently handle the incoming data flows.

Delta Networks show an intrinsic constraint due to the existence of a single path between any generic couple of inlet/outlet links. This property involves a low throughput and no fault tolerance capability. In order to reach the non−blocking property, the two main alternatives are possible:
i) adding redundant stages to a Delta network;
ii) assembling Delta networks in parallel. The first approach allows a rearrangeable network to be defined by merging two Baseline networks, i.e. two Delta networks. A NxN network of this type provides N multiple paths between any couple of inlet/outlet links and the method of establishing an inlet/outlet permutation has a complexity of the order of $N.\log_2 N$. More recently it has been proved that the property of rearrangeability takes validity for any $2.(\log_2 N)-1$ stage network formed by merging two Delta networks.

A drawback of this approach is represented by the large number of stages in series which the network is consisting of and consequently by the high transit delay as far as the application in the telecommunication field is concerned.

As for the assembling of Delta networks in parallel, aspects concerning the performance for fault tolerance as well as throughout and delay have been discussed. As for the problem of rearrangeability the upper limit for the number of necessary delta networks is given by ($L = 2^{\lfloor 1/2.\log_2 N \rfloor}$), where $\lfloor X \rfloor$ is the whole part lower than x.

In the paper "Realization of Permutation on Generalized INDRA Networks", (published in the Proceed−ings of the 1985 International Conference on Parallel Processing, August 20−23, 1985, Department of Electric Engineering, Penn Sate University, University Park, Pennsylvania, pages 328−333) a class of networks is disclosed which are constructed by combining L layers of Delta networks in parallel preceded by a distribution stage. This redundance is provided on the input side of the networks so that failures in the distribution stage could be sustained. In this paper, there is shown that by utilizing the INDRA networks it is possible to realize only a subset of all feasible permutations and, in particular, it is possible to realize a class of permutations called Bit−Permute−Component (BPC).

This invention relates to a new class of NxN multi−stage interconnection networks which is called class of "Parallel Delta Networks" (PDN), for which the conditions assuring the rearrangeability property are given.
These conditions are valid whichever the size of the network and of the single switching element may be. Further a method for establishing any inlet/outlet permutation is given.

In order to make PDN rearrangeable it should be made a condition about the minimum number of Delta networks which PDN is consisting of, and in order to define such a number the concept of distance between two links incoming into or outcoming from the same stage as well as the graph colouring technique is used.

By this invention a method of establishing inlet/outlet paths based on the graph colouring technique is further given. As known, the problem of colouring a graph is generally unsolved. Therefore the technique of leading the problem of establishing inlet/outlet paths to a problem of colouring graphs does not lead to any solution if it is not carried out with a particular network structure.

On the base of the particular structure provided by the present invention a method of establishing connection requests is proposed having a very small complexity which increases in polynomial way by the increasing of the graph size and with a very low exponent. Carrying out this method requires the knowledge of all connection requests and is assigned to a special functional block. Finally it should be appreciated that the method of the invention along with a variant thereof makes said structure adapted to both application environments which have used with greater interest Delta networks in the last years, i.e. the synchronous computer environment and the asynchronous telecommunication environment.

2

The method of establishing a routing has been designed with the aim of satisfying two different requirements: i) minimizing the complexity for the establishment of an inlet/outlet permutation; ii) minimizing the complexity for the establishment of a single connection request, whatever the state of the network may be, with the minimum number of rerouted paths.

The proposed method satisfies the first requirement with a complexity of the order of $N^{3/2}$. The second requirement has been met by assuring the set−up of a single connection request with complexity of the order of $\sqrt{N}$; moreover the maximum number of rerouted paths is less than $2 \cdot \sqrt{N}$.

According to the present invention a variant to the method has been designed which is applicable only in case of $2^q \times 2^q$ switching element size, where q is a whole number. Such a variant for the establishment of a complete permutation is characterized by a complexity of the order of $N \cdot \log_2 N$; consequently it is more efficient as far as the first requirement is concerned but less adapted to the establishment of a single connection request.

The present invention will be described herebelow in detail with reference to the annexed drawing, wherein:

Fig. 1 is a schematic diagram of the non−blocking condition expressed by property III;

Fig. 2 is a block diagram of a NxN interconnection Parallel Delta Network (PDN).

Fig. 3 is an example of a NxN interconnection network, where N = 16, n = 2, L = 2;

Fig. 4 is an example of the conflict graph g in case of PDN of Fig. 3;

Fig. 5 is in the graph G relative to graph g of Fig. 4;

Fig. 6 is an example of recolouring a path in graph G of Fig. 5;

Fig. 7 is an example of colouring a graph provided by non−considering the vertices having degree less than P;

Fig. 8 is an example of graph $G_b^1$ and assignment of bit $b_1$;

Fig. 9 is a graph $G_b^2$ obtained from graph $G_b^1$ of Fig. 8 with an example of assignment of bit $b_2$.

Networks defined in this invention are based on Delta networks. Therefore, in order to check that such networks can be made non−blocking, some properties of Delta networks should be introduced.

Delta networks of NxN size are formed of $S = \log_n N$ stages labelled from 0 to $S-1$ from the inlet to the outlet, each formed of N/n switching elements (EC) of the nxn type; inlets and outlets of a Delta network are labelled from 0 to $N-1$ from top to the bottom.

Dealing with some properties of Delta networks needs the definition of the distance between two links valid in case as Delta network the Baseline network is used to build a PDN. According to the known topological and functional equivalence of Delta networks it is possible to provide a definition in case PDN is based on Delta networks different from Baseline networks

Definition:

the distance

$$d_{in}^{n,s}(x,y) - \left(d_{out}^{n,s}(x,y)\right) -$$

between two links (x,y) incoming into (outcoming from) stage s of a network with switching elements of nxn size is given by: max z $\lfloor x/n^z \rfloor \neq \lfloor y/n^z \rfloor (0 \leq x, y \leq N-1)$ with z = 0, 1, 2... It will be shortly indicated herebelow with $d_{in}(x,y) - (d_{out}(x,y)) -$ the distance between two specific links x and y incoming into − (outcoming from) − the network, and with $d_{in} - (d_{out}) -$ the distance between two generic links. This definition implies that the distance $d_{in} - (d_{out}) -$ ranges between a minimum value equal to 0 and a maximum value equal to $S-1$. The definition of distance has a physical meaning expressed by following properties:

Property I:

let two generic inlets of a Delta network be located at a distance $d_{in}$. Any pair of paths originating from these inlets either do not share any link or the first shared link is that outcoming from the socalled merging switching element located in the stage $s = d_{in}$.

Property II:

let two generic outlets of a Delta network be located at a distance $d_{out}$. Any pair of paths directed towards these outlets either do not share any link or the last shared link is that incoming into the socalled splitting switching element located in the stage $s = S - 1 - d_{out}$.

The previous two properties lead to following property since the merging switch element should precede the splitting switching element:

Property III:

two generic inlet – outlet paths having the two inlet links and the two outlet links at a distance $d_{in}$ and $d_{out}$, respectively, are disjoined if and only if:

$$d_{in} + d_{out} \geqq S - 1$$

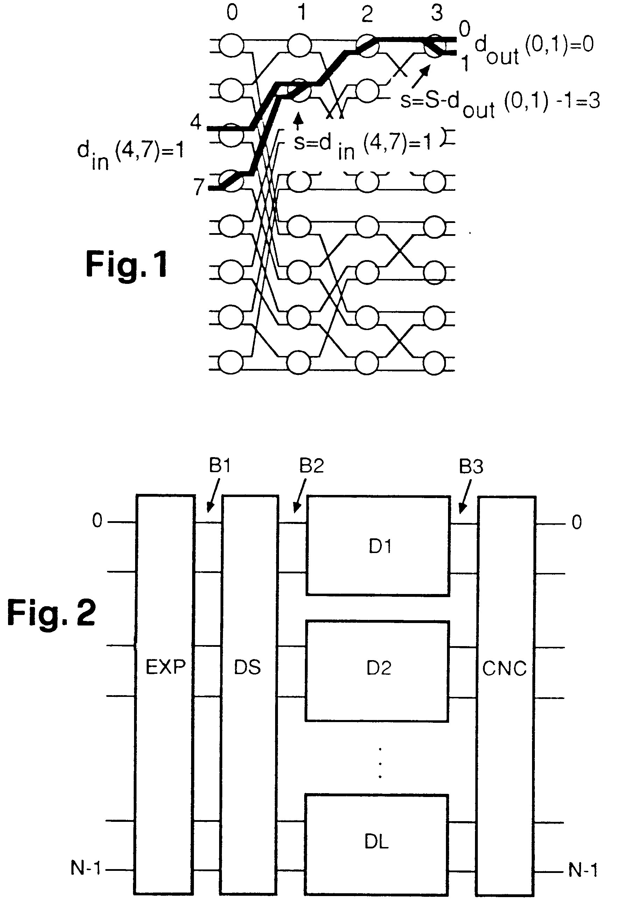

Fig. 1 shows a graphical representation of the above cited properties by way of example. In Fig. 1 two paths are shown in heavy type, and namely the paths between inlet links 4 and 7 and outlet links 0 and 1, respectively. It should be noted that the first link shared by such paths is that outcoming from a switching element of the stage $s = d_{in} = 1$ and the last one is that incoming into a switching element of the stage $s' = S - 1 - d_{out} = 3$.

In this example $d_{in} + d_{out} < S - 1$ and consequently the two paths are not disjoined and share a number of links equal to $s' - s = 2$.

If a Delta network different from the Baseline network is used the definition of distance should be modified so that property I and II are still valid and therewith also property III is valid.

According to this invention the class of Parallel Delta Network (PDN) is defined as follows: a PDN of NxN size with switching elements of nxn size consists of (Fig. 2):

i) L Delta networks of NxN size labelled from D1 to DL, with nxn switching elements;

ii) a distribution stage designated by (DS) and composed of NL/n switching elements of nxn size;

iii) two complementary stages designated by (EXP) and (CNC) which perform the expansion and concentration functions, respectively, and are composed of N switching elements of 1xL and Lx1 size, respectively, socalled expansion elements and concentration elements.

In order to define such a network the connection rules associated to the following interstage bundles (B1, B2, B3) should be given:

B1 is located between stage (EXP) and stage (DS):

B2 is located between stage (DS) and L Delta networks:

B3 is located between L Delta networks and stage (CNC).

$P = L.n$ multiple paths are provided between any pair of inlet – outlet links. A path is identified by a network address which is composed of two fields: distribution address and destination address.

The distribution address is composed of two digits expressed in scale of L and in scale of n, respectively; the first one provides routing through the stage (EXP), the second one through the stage (DS). The destination address is a S digit pattern in scale of n and provides routing through the generic Delta network selected from the distribution address.

The P multiple paths between each inlet – outlet pair are associated to P different distribution addresses which identify such paths.

According to this invention interstage bundle B3 connects the generic outlet link $\bar{i}$ of Delta network to the concentration element relative to the outlet link i of PDN.

The definition of interstage bundles B1 and B2 is such that:

i) the P paths relative to each pair of inlet – outlet links are equally distributed among the L Delta networks, i.e. in such a way that n paths pass through each of L Delta networks;

ii) n paths relative to each pair of inlet – outlet links and passing through a single Delta network are incoming at inlet links associated at a maximum distance from one another, which is equal to $S - 1$ as already mentioned;

iii) if two paths have two different distribution addresses, such paths either pass through two different Delta networks or reach the inlets of the same Delta network which are at a distance equal to $S - 1$;

iv) in case two paths are characteried by the same distribution address, such paths reach the inlets of the same Delta network which are at a distance lower than $S - 1$, and namely the two paths reach two inlet links of the Delta network located at a distance $d_{in} - 1$, wherein $d_{in}$ is the distance between the inlets links of the PDN.

In the particular case $d_{in} = 0$ both paths sharing the same links outcoming from stage (DS) reach the same link incoming into Delta network.

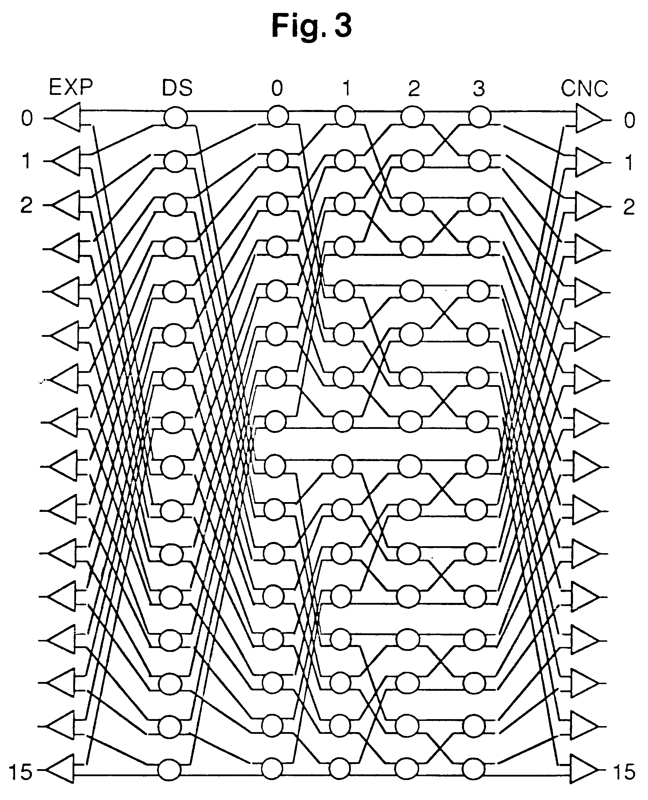

An example of PDN with $N = 16$, $n = 2$, $L = 2$ based on Baseline network is shown in Fig. 3.

Therefore, by applying property III we have:

Property IV:

two inlet − outlet paths of a PDN with inlet and outlet links located at a distance $d_{in}$ and $d_{out}$, respectively, are disjoined if and only if either they have different distribution addresses or equal distribution addresses and the following relationship is satisfied:

$$d_{in} + d_{out} \geq S \quad (E1)$$

It is herebelow shown that PDN has the non − blocking feature if it is formed of at least $n^{\lceil S/2 \rceil - 1}$ Delta feature if it is formed of at least $n^{\lceil S/2 \rceil - 1}$ Delta networks and further than $n^{\lceil S/2 \rceil - 1}$ is also the minimum number to achieve this aim. In order to check that $n^{\lceil S/2 \rceil - 1}$ is actually a minimum so that the PDN can be rearranged, let assume to have as connection request an identity permutation, in which inlet link i should be connected to outlet link i. By applying property IV the first $n^{\lceil S/2 \rceil}$ connection requests must be routed through $n^{\lceil S/2 \rceil}$ paths corresponding to $n^{\lceil S/2 \rceil}$ different distribution addresses and, therefore, at least $n^{\lceil S/2 \rceil - 1}$ Delta networks are necessary in order not to give rise to a conflict. In order to check that such a number of Delta networks is also sufficient to assure the rearrangeability it should be proved that the expression (E1) is verified for any connection request association to the same distribution address. To this end it is convenient to define a non − directed graph g called "conflict graph" in which each vertex represents a connection request (therefore N vertices are present) and an edge exists between two vertices if expression (EI) does not hold.

Such a graph synthetically indicates what connection requests can have distribution addresses equal to one another and what can not; in fact, if two connection requests are established, they can have distribution addresses equal to each other only if the corresponding vertices are not adjacent.

Consequently, the problem of assigning one distribution address on P to each connection request is equivalent to colour graph g with P colours so that each colour represents a different distribution address and two adjacent vertices do not bear the same colour. Therefore, in order to find the minimum number of Delta networks forming a PDN which can be rearranged, the minimum number of colours necessary to colour the graphs relative to any possible inlet − outlet permutation should be determined. It is easy to prove that conflict graph g is contained in a perfect graph G with maximum clique equal to P and, therefore, can be coloured with P colours on the base of the graph colouring technique; consequently, also graph g can be coloured with P colours (see M. Gondran, M. Minoux: "Graphs and algorithms", John Wiley, 1984; M.L. Golumbic: "Algorithmic graph theory and perfect graphs", Academic Press, New York 1980). In conclusion, a PDN can be rearranged when its number of layers (L) is greater than or equal to $n^{\lceil S/2 \rceil - 1}$ or, which is equivalent, the number of multiple paths (P) between a generic pair of inlet − outlet links is greater than or equal to $n^{\lceil S/2 \rceil}$ according to following expressions:

$$L \geq n^{\lceil S/2 \rceil - 1}$$
$$P \geq n^{\lceil S/2 \rceil}$$

The perfect graph G is given by considering following expressions instead of (E1):

$$d_{in} \geq \lceil S/2 \rceil \quad (E2)$$
$$d_{out} \geq \lceil S/2 \rceil \quad (E3)$$

A graph is designed in which each vertex represents a connection request, and an edge exists between two vertices if at least one of the expressions (E2, E3) does not hold. It shoul be noted that, if for a generic pair of connection requests expression (E1) is not satisfied, also at least one of both expressions (E2, E3) is not satisfied. Consequently, if an edge is present between a pair of vertices in graph g, an edge will be present also in graph G between the same pair of vertices.

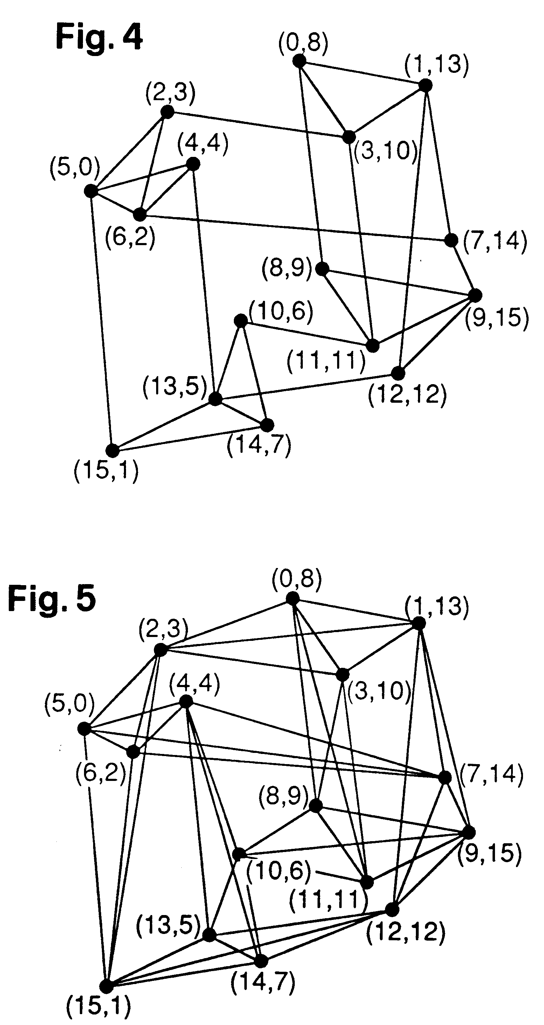

In Fig. 4, in case of the PDN shown in Fig. 3, conflict graph g for the permutation:

| 0 | 1 | 2 | 3 | 4 | 5 | 6 | 7 | 8 | 9 | 10 | 11 | 12 | 13 | 14 | 15 | inlets |
|---|---|---|---|---|---|---|---|---|---|----|----|----|----|----|----|--------|
| 8 | 13 | 3 | 10 | 4 | 0 | 2 | 14 | 9 | 15 | 6 | 11 | 12 | 5 | 7 | 1 | outlets |

is shown.

5

In Fig. 4 the pair of inlet–outlet links of the connection request, to which a vertex is associated, is indicated on one side of said vertex. It should be noted that an edge between two vertices indicates that the expression (E1) is not satisfied for the connection requests associated to said two vertices. For example, an edge is present between the vertices associated to the connection requests (2, 3) and (5, 0) and in this case expression (E1) is not satisfied; in fact $d_{in}$ (2, 5) + $d_{out}$ (3, 0) = 2 + 1 = 3 which is less than S equal to 4. On the contrary, no edge is present between the vertices associated to the connection requests (2, 3) and (4, 4) and in such a case $d_{in}$ (2, 4) + $d_{out}$ (3, 4) = 2 + 2 = 4 which is equal to S. Graph G relative to graph g of Fig. 4 is shown in Fig. 5. An edge is present in this graph between two vertices if at least one of both expressions (E2, E3) is not satisfied. It should be noted that graph G contains besides all edges present in graph g also further edges. For example, in graph g of Fig. 4 no edge is present between the pair of vertices associated to both connection requests (2, 3) and (0, 8) as $d_{in}$ (2, 0) + $d_{out}$ (3, 8) = 1 + 3 = 4 = S, while an edge is present between the same pair of vertices in graph G of Fig. 5 as $d_{in}$ (2, 0) = 1, which is less than $\lceil S/2 \rceil$ = 2, and expression (E2) is not satisfied. The method for the establishment of inlet–outlet connection requests will be now described. The method is based on a step by step colouring of the N vertices of graph G. At the generic step j the method considers only the subgraph identified by the j − 1 vertices which has been coloured in the previous steps and can provide the recolouring of some of the latter.

Since there is a biunivocal correspondance among P colours and P multiple paths between the generic pair of inlet–outlet links, defining a routing for N connection requests is equivalent to finding a colouring of graph g of G.

In order to describe such a routing method the following definition is necessary:

let

$$C_{in}^{j} \ (v) \left( C_{out}^{j} \ (v) \right)$$

be the set of vertices w already coloured in the j − 1 previous steps and connected to vertex v, and $d_{in}(v, w)$ < $\lceil S/2 \rceil$ − ($d_{out}$ (v, w) < $\lceil S/2 \rceil$) −. As the method is based on a step by step colouring of N vertices, it will be described only the generic step comprising following phases:

(a) let consider only the subgraph of G composed of already coloured vertices and vertex v which is the new one to be coloured;

(b) if there is a colour among P colours which is not used by the vertices adjacent to vertex v, such a colour is assigned to vertex v and the colouring procedure is over:

(c) if the condition of phase (b) is not met two colours $c_1$ and $c_2$ are chosen provided that $c_1$ ($c_2$) has not been used to colour the set

$$C_{in}^{j}(v) \ - \left( C_{out}^{j}(v) \right) - ;$$

(d) colour $c_1$ or $c_2$ is assigned to vertex v;

(e) the path consisting of the vertices of graph G, coloured with $c_1$ or $c_2$ and originating from the vertex adjacent to vertex v and coloured with the same colour as v, is recoloured so as to have an alternation of colours $c_1$ and $c_2$, i.e. without having the same colour in two adjacent vertices.

As an example of said method the following table carries the colouring of the graph shown in Fig. 5. Graph of Fig. 5 refers to the network of Fig. 3, as mentioned above, wherein n = 2, S = 4, L = 2; therefore, as $n^{\lceil S/2 \rceil - 1 = 2}$, we have L = $n^{\lceil S/2 \rceil - 1}$. Consequently network of Fig. 3 is rearrangeable and P = $n^{\lceil S/2 \rceil}$ = 4 colours designated by the letters A, B, C, D are available for colouring the vertices of graph G of Fig. 5.

TABLE

| Step | Connection request | Colours not used in the adjacent nodes | Colours not used in nodes $C_{in}^j(v)$ | Colours not used in nodes $C_{out}^j(v)$ | Assigned colour |
|---|---|---|---|---|---|
| 1 | (0,8) | A,B,C,D | | | A |
| 2 | (1,13) | B,C,D | | | B |
| 3 | (2,3) | C,D | | | C |
| 4 | (3,10) | D | | | D |
| 5 | (4,4) | A,B,C,D | | | A |
| 6 | (5,0) | B,D | | | B |
| 7 | (6,2) | D | | | D |
| 8 | (7,14) | C | | | C |
| 9 | (8,9) | B,C | | | B |
| 10 | (9,15) | A,D | | | A |
| 11 | (10,6) | C,D | | | C |
| 12 | (11,11) | None | D | B | D |
| 12.1 | (3,10) | | | | C |
| 12.2 | (2,3) | | | | D |
| 12.3 | (6,2) | | | | C |
| 12.4 | (7,14) | | | | D |
| 13 | (12,12) | C | | | C |
| 14 | (13,5) | B,D | | | B |
| 15 | (14,7) | D | | | D |
| 16 | (15,2) | A | | | A |

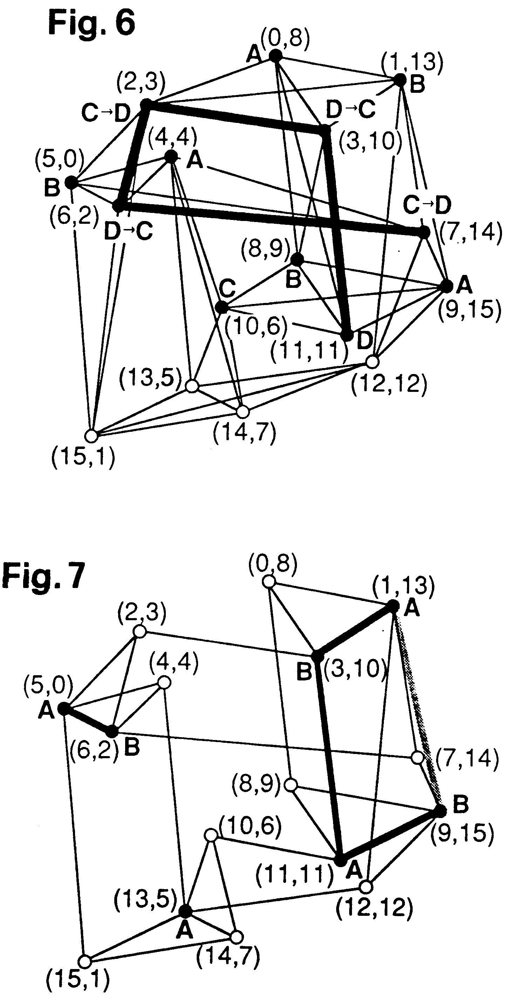

As shown in the table, at least a colour not used in the vertices adjacent to the vertex to be coloured is available in each step, with the exception of step 12 in which we have a recolouring that is shown in greater detail in Fig. 6. In Fig. 6 the white vertices have not been coloured yet, while the black vertices identify those vertices which have been coloured; beside black vertices a letter indicating the colour given to that vertex is placed. The recolouring path is pointed out by indicating the assigned recolouring beside the vertices belonging to such a path.

In order to validate this method the following property should be verified.

Property V:

at the end of a generic step j, adjacent vertices have different colours.

The proof is inductive. At the end of step $j = 1$ only one vertex is coloured and the property is straightforwardly proved.

By hypothesis, at the beginning of the generic step j there are no adjacent vertices having the same colour among the $j-1$ already coloured vertices. Starting from a non-coloured vertex v, if the condition of phase (b) is not met as described above, the property is proved: otherwise, as mentioned in phase (c), two colours must be chosen. This choice is always possible since by definition both sets $C_{in}^j(v)$ and

$$C_{out}^j(v)$$

have cardinality lower than P.

The recolouring step refers only to the subgraph $g^j(v, c', c'')$ composed of the vertex v and all the vertices coloured with $c_1$ or $c_2$. In order to fully prove the property it should be verified that:

- the set of vertices belonging to $g^j(v, c', c'')$ which can be reached from v constitutes a path on $g^j(v, c', c'')$;
- this path is not an odd cycle, i.e. composed of an odd number of vertices.

As far as the first item is concerned, since at the end of step j property V is supposed to be true by hypothesis, subgraph $g^j(v, c', c'')$ is perfect, its clique number is lower than or equal to 2, and its maximum degree is 2. The second item is banally proved by considering that $g^j(v, c', c'')$ is perfect and the clique number is lower than or equal to 2.

The complexity of the single step of the described method is of the order of $\sqrt{N}$. In fact graph G consists of $2 \cdot N/P$ cliques of number P, N/P relative to the expression (E2) and N/P relative to the condition (E3). Therefore, the recolouring path can follow a clique number lower than 2.N/P so that the complexity is of the order of N/P equal to the order of $\sqrt{N}$. As N steps should be effected for the establishment of a complete permutation, the total complexity of the method is of the order of $N^{3/2}$.

In order not to reduce the complexity of the method but rather the number of cases in which a recolouring is necessary, variants to the above described method can be provided according to this invention.

From Figs. 4 and 5 can be easily noted that graph G has a number of edges equal to N (P − 1) /2 which is much greater than the number of edges of conflict graph g. Therefore G is a perfect graph just because it has a greater number of edges, thus allowing an easier colouring method to be carried out. In some cases, however, a lot of edges may involve the necessity of recolouring, i.e. a rerouting, while in graph g the colouring is very easy. In particular, if in graph g a vertex has a number of adjacent nodes lower than P (vertex with degree lower than P) it is always possible to find a colour not used by the vertices adjacent to said vertex. In this connection, a possible variant to the method is that of not providing in G all the vertices of g but only those having at least P adjacent vertices and carrying out the following colouring steps:

(f1) − vertices of G are coloured according to the above described method;

(f2) − vertices of g having corresponding vertices in graph G are coloured with the same colours as in step (f1);

(f3) − the remaining vertices of g having, as mentioned above, a number of adjacent vertices lower than P are coloured with a colour not used by said adjacent vertices.

In Fig. 7 there is shown an example of the graph provided by this method and the colouring thereof. Vertices having a degree lower than P, which in such an example is equal to 4, are depicted in white, while the other vertices are black and beside them a feasible colouring is provided. In Fig. 7 the edges of graph g connecting black vertices are marked by heavy lines. Furthermore the edge added according to the expressions (E2, E3) is depicted in grey. This edge connects the vertices associated to connection requests (1, 13) and (9, 15).

The statement that a vertex having a degree lower than P can be anyhow easily coloured without causing a recolouring allows the reduction of the number of nodes to be coloured and thus a simplification of the method.

According to this invention an extension of such a variant consists in that, if before passing to graph G the vertices having a degree lower than P are removed from graph g, a graph g' is provided containing only the vertices of graph g having a degree higher than or equal to P, but having in graph g' a degree lower than or equal to the degree that they had in graph g, as some vertices have been removed. Therefore, vertices having a degree lower than P can be provided in graph g'. Consequently, the same consideration as for graph g can be repeated for graph g', and the vertices having a degree lower than P can be removed. Such a reduction of vertices can be repeated until a graph is achieved in which only vertices with at least P adjacent vertices are provided. Then a graph G is formed having the vertices of the latter graph and an edge is placed between the pair of vertices in which at least one of the expression (E2, E3) is not met.

Under the constraint of a switching element of $2^q \times 2^q$ size a variant of the establishment method according to the present invention can be employed.

The distribution address can be coded with $\lceil S/2 \rceil$ bits, wherein the bit pattern $(b_1\ b_2 ... b_{q\ \lceil S/2 \rceil})^{v_h}$ indicates the distribution address relevant to the connection request $(i_h, o_h)$ associated to vertex $v_h$. For the sake of simplicity such a variant is described for q = 1 (switching element 2x2); the extension to the case q>1 is straightforward. On the basis of the previous representation of the distribution address, expressions (E2, E3) which give the conditions to be satisfied for properly routing a permutation can be rewritten as follows:

$$d_{in}(i_h, i_k) \geq \lceil S/2 \rceil$$

$$\forall\ v_h,\ v_k \quad (b_1\ b_2...b_{\lceil S/2 \rceil})^{v_h} = (b_1\ b_2...b_{\lceil S/2 \rceil})^{v_k}$$

$$d_{out}(o_h.o_k) \geq \lceil S/2 \rceil$$

8

The problem of satisfying the previous relations can be solved in $\lceil S/2 \rceil$ steps, where $\lceil S/2 \rceil$ is the number of bits with which the distribution address is coded, wherein one bit is assigned to each connection request. At the generic step j the routing method assigns different values to the $b_j$ – th bit of the distribution addresses which are characterized by the same j – 1 bits and are relevant to connection requests having inlet links located at a distance $d_{in} = j - 1$ or outlet links located at a distance $d_{out} = j - 1$.

The above mentioned procedure is based on the assumption that at the end of the generic step j the following conditions hold:

$$d_{in}(i_h, i_k) \geq j$$

$$\forall\ v_h,\ v_k \quad (b_1\ b_2 \ldots b_j)^{v_h} = (b_1 b_2 \ldots b_j)^{v_k}$$

$$d_{out}(o_h, o_k) \geq j$$

The previous expressions indicate that at the end of the generic step j different distribution addresses have been assigned to connection requests having inlet links located at a distance $d_{in} < j$.

The validity of the previous assumption can be proved by leading back the problem of assignment of the bit $b_j$ to a graph colouring problem with two colours corresponding to bit 0 and bit 1.

To this end a graph

$$G_b^j = \left[ V,\ E_b^j \right]$$

is defined at each step j, where:

$$V = \left\{ v_l;\ l = 0, 1, \ldots, N-1 \right\}$$

$$E_b^j = E_{in,b}^j \cup E_{out,b}^j \qquad j = 1, 2, \ldots, \lceil S/2 \rceil$$

$$E_{in,b}^j = \left\{ (v_h,\ v_k)\ \middle|\ d_{in}(i_h,\ i_k) = j-1 \wedge (b_1 \ldots b_{j-1})^{v_h} = (b_1 \ldots b_{j-1})^{v_k},\ h < k \right\}$$

$$E_{out,b}^j = \left\{ (v_h,\ v_k)\ \middle|\ d_{out}(o_h,\ o_k) = j-1 \wedge (b_1 \ldots b_{j-1})^{v_h} = (b_1 \ldots b_{j-1})^{v_k},\ h < k \right\}$$

where the subscript b means binary and $(b_1 \ldots b_{j-1})^{v_h}$ is the bit pattern assigned to the distribution address relative to vertex $v_h$ in the j – 1 previous steps.

Graph $G_b^j$ is composed of $2^{j-1}$ disjoined graphs each containing all the vertices characterized by the same previously assigned bit pattern $(b_1 \ldots b_{j-1})$.

The generic graph $G_b^j$ at the step j is a perfect graph which can be coloured with 2 colours and with a maximum degree equal to 2, i.e. it consists of a set of disjoined even cycles. The colouring of the single graph $G_b^j$ is, therefore, carried out by the following method:
the vertices of the graph are coloured by moving on said even cycles and by alternating bit 0 to bit 1 in the assignment of colours.

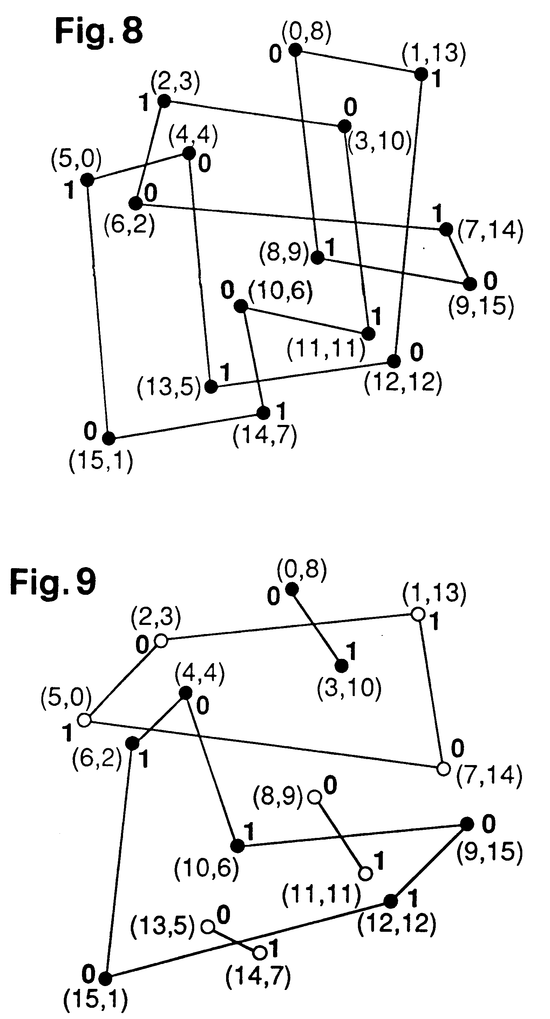

An example of the assignment of bits $b_1$ and $b_2$ in the case of the previously indicated permutation for PDN of Fig. 3 is shown in Figs. 8 and 9, respectively, where beside each vertex a feasible colouring is shown.

In Fig. 9 the vertices which in the graph of Fig. 8 have the colour 0 and 1 are indicated with black and white vertices, respectively. It should be appreciated that no edge connects black vertices to white vertices.

Furthermore, all cycles are even, and in case the cycle is formed of only two vertices, it degenerates into a segment.

The complexity of such a variant of the method is of the order of $N \cdot \log_2 P$ or, which is equivalent, of the order of $N \cdot \log_2 N$; in fact the number of the steps is equal to $\lceil S/2 \rceil = \log_2 P$ and in each step all the N vertices are coloured by following one or more even cycles on $G_b^j$ and by passing only once on each vertex.

**Claims**

1.  NxN interconnection networks comprising:

    i) L Delta networks of NxN size in parallel to one another having nxn switching elements, where N and n are the number of inlet and outlet links of the single Delta network and the single switching element, respectively, and S stages, where $S = \log_n N$;

    ii) a distribution stage (DS) composed of NL/n switching elements of nxn size;

    iii) two complementary stages (EXP) and (CNC) performing the function of expansion and con $-$ centration, respectively, and consisting of N switching elements of lxL and Lxl size, respectively;

    characterized in that

    interstage bundles (B1, B2, B3) connect stage (EXP) and stage (DS), the latter and the L Delta networks and the latter and stage (CNC), respectively, so that the $P = L \cdot n$ multiple paths among any pair of inlet $-$ outlet links of the network are equidistributed among Delta networks so that the network is rearrangeable if $L \geq n^{\lceil S/2 \rceil - 1}$, said interstage bundles (B1, B2, B3) being such that:

    a) the P paths relevant to each pair of inlet $-$ outlet links are equidistributed among the L Delta networks so that n paths pass on each of the L Delta networks;

    b) the n paths relevant to each pair of inlet $-$ outlet links and passing on a single Delta network are incoming into inlet links thereof located at a maximum distance from one another equal to $S - 1$, i.e. the number of the stages of the Delta networks less one, the inlet links of each Delta network being labelled from 0 to $N - 1$;

    c) two paths, which do not pass through homonymous outlets of two expanding elements and/or do not pass through homonymous outlets of two switching elements of the distribution stage, either pass through two different Delta networks or reach the inlets of the same Delta network which are at a distance equal to $S - 1$, the outlet links of each expanding element as well as of each switching element of the distribution stage being labelled from 0 to $L - 1$ and from 0 to $n - 1$, respectively;

    d) two paths passing through homonymous outlets of two expanding elements and through homonymous outlets of two switching elements of the distribution stage reach the inlets of the same Delta network which are at a distance $d_{in} - 1$, where $d_{in}$ is the distance of the inlet links of the NxN interconnection network from which said two paths originate, the inlet links of the NxN interconnec $-$ tion network being labelled from 0 to $N - 1$.

2.  NxN interconnection networks according to claim 1, characterized in that the interstage bundle B3 connects the homonymous outlets of all Delta networks to the inlets of the concentration stage having homonymous outlet as said outlets of the Delta networks, the outlet links both of each Delta network and the NxN interconnection network being labelled from 0 to $N - 1$.

3.  NxN interconnection networks according to claim 1, characterized in that:

    i) the distance between two outlet links both of a Delta network and of a NxN interconnection network is equal to the distance between two homonymous inlet links as said outlet links;

    ii) the distance between two inlet links of a NxN interconnection network is equal to the distance between two inlet links bearing the same name of the Delta network which the NxN interconnection network consists of;

    iii) the distance between two inlet links of a Delta network provides the position of the stage having an outlet link which is the first shared outlet link between two non $-$ disjoined paths starting from said inlet links, the stage of the Delta network being labelled from 0 to $S - 1$ from the inlet to the outlet.

4.  Method for the establishment of inlet $-$ outlet permutations in a NxN interconnection network according to claims 1 to 3, comprising the steps of:

    i) to P multiple paths between a generic pair of inlet $-$ outlet links of the NxN interconnection network P different colours are associated so that the same colour is associated to all the paths passing both through homonymous outlets of the expanding elements and through homonymous outlets of the switching elements of the distribution stage;

    ii) and comprising the following steps:

    (a) providing a graph G by associating a vertex of graph G to any connection request of an inlet link towards an outlet link of the NxN interconnection network and by arranging an edge between any pair of vertices associated to connection requests the inlet and/or outlet links of which are at a distance lower than $\lceil S/2 \rceil$;

(b) colouring graph G in N steps so that in each of said step a single vertex v is coloured and some vertex coloured in the previous steps can receive a different colour; then the connection request associated to vertex v is established with the path relative to the colour used for said vertex, and the connection requests, the vertex of which have received a different colour, are rerouted with the paths associated to the new colours, the single step consisting of the following substeps:

(b.1) if there is a colour c among the P colours which is not used by the vertices adjacent to vertex v, such a colour is assigned to vertex v and the colouring process of vertex v is over;

(b.2) if the condition of the previous substep is not verified, two colours $c_1$ and $c_2$ are chosen which have not been used to colour the sets of vertices w coloured in the previous steps and having the inlet and outlet links of the associated connection requests located at a distance lower than $\lceil S/2 \rceil$ from the inlet and outlet links of the connection request associated to vertex v, respectively;

(b.3) colouring vertex v with $c_1$ or $c_2$ and recolouring the vertices belonging to the path of the graph formed only of the vertices coloured with $c_1$ or $c_2$ and originating from the vertex, which is adjacent to vertex v and have the same colour which has been given to said vertex, by assigning to the vertices of said path the new colour $c_1$ if said vertices were coloured with $c_2$ and viceversa, i.e. by alternating along the path of the graph colour $c_1$ to colour $c_2$ without having adjacent vertices with the same colour.

5. Method according to claim 4, characterized by the fact of comprising the following steps:

(f1) providing two graphs g and G according to following substeps:

(f1.1) associating one vertex of graph g to any connection request from an inlet link to an outlet link of the NxN interconnection request;

(f1.2) providing an edge between each pair of vertices associated to connection requests such that the sum of the distance between inlet links and the distance between outlet links is lower than S;

(f1.3) associating to any vertex of graph g, having at least P adjacent vertices, one vertex of graph G which is then also associated to the connection request relative to the corresponding vertex of graph g; consequently, graph G is formed of a number of vertices less than or equal to those belonging to graph g;

(f1.4) providing an edge between any pair of vertices of graph G associated to connection requests the inlets and/or outlets of which are at a distance less than $\lceil S/2 \rceil$;

(f2) effecting the colouring of graph G by using step (b) and its substeps according to claim 4;

(f3) effecting the colouring of graph g according to following substeps:

(f3.1) giving the colour of the corresponding vertices of graph G to the vertices of graph g having at least P adjacent vertices;

(f3.2) giving the vertices of graph g having less than P adjacent vertices a colour which is selected from the P total colours and is not used by the vertices adjacent to said vertices.

6. Method according to claims 4 and 5, characterized in that before carrying out step (f2) graph G can be reduced by removing a vertex which has a number of adjacent vertices less than P and is going to be coloured according to substep (b.1) of claim 4 after the colouring of the remaining graph, said reduction operation being repeated until said remaining graph is formed only of vertices with at least P adjacent vertices.

7. Method according to claim 4, operating on NxN interconnection networks in which the switching elements have a number of inlets and outlets equal to a power of 2, i.e. a $2^q \times 2^q$ size with q being a whole number, characterized in that:

i) the colour according to claim 4 is given by a pattern of $q(\lceil S/2 \rceil - 1)$ bits;

ii) it comprises following steps:

(k1) establishing a colour in $q(\lceil S/2 \rceil - 1)$ steps labelled from 0 to $q(\lceil S/2 \rceil - 1)$, in each of said steps the following substeps being provided:

(k1.1) forming a graph, the N vertices of which associated to N connection requests of an inlet towards an outlet of the NxN interconnection network are labelled at the beginning of the generic step h with a pattern of h bits and at the end of the step h with a pattern of h+1 bits composed of said pattern of h bits and the bit used for colouring the generic vertex in said step;

(k1.2) providing an edge at the generic step $\underline{h}$ between any pair of vertices labelled with the same pattern of $\underline{h}$ bits and associated to connection requests, the inlet and/or outlet links of which are at a binary distance equal to $\underline{h}$;

(k1.3) colouring the vertices of the $\overline{\text{graph}}$, composed only of a set of disjoined even cycles, by moving on said even cycles and by alternating bit 0 to bit 1 during the assignment of the colour, and namely according to the following substeps:

(k1.3.1) assigning either bit 0 or bit 1 to a non−coloured vertex;

(k1.3.2) assigning a bit different from the last used bit to a non−coloured vertex, if any, adjacent to the last coloured vertex;

(k1.3.3) repeating substep (k1.3.2) until the condition thereof is verified, whereupon repeating substep (k1.3.1) until the graph is fully coloured.

**8.** Method according to claim 7, characterized in that the binary distance between two inlet or outlet links of the NxN interconnection network is given by the distance between two inlet links, homonymous to said links, of a Delta network of the same type which the interconnection network is composed of, the single $2^q \times 2^q$ switching element being replaced by a Delta network of $2^q \times 2^q$ size having switching elements of 2x2 size.

**Patentansprüche**

**1.** NxN − Verbindungsnetzwerke, bestehend aus:

i) L Delta − Netzwerken der Größe NxN parallel zueinander, die nxn Schaltelemente haben, wobei "N" und "n" die Anzahl der Ein − und Ausgangsglieder des einzelnen Delta − Netzwerks bzw. des einzelnen Schaltelements sind, und S − Stufen, wobei S − log$_n$N;

ii) einer Verteilerstufe (DS), bestehend aus NL/n − Schaltelementen der Größe nxn;

iii) zwei komplementären Stufen (EPX) und (CNC), die die Expansions − bzw. Konzentrationsfunktion durchführen und aus N Schaltelementen der Größe lxL bzw. Lxl bestehen,

**dadurch gekennzeichnet, daß**

Zwischenstufen − Bündel (B1, B2, B32) die Stufe (EXP) und die Stufe (DS), letztere und die L − Netzwerke bzw. letztere und die Stufe (CNC) verbinden, so daß die $P = L \cdot n$ Mehrfachpfade zwischen irgendeinem Paar von Eintritts − Austritts − Gliedern des Netzwerkes in den Delta − Netzwerken gleich verteilt sind und das Netzwerk umschaltbar ist, wenn $L \geq n^{\lceil S/2 \rceil} - 1$, wobei die Zwischenstufen − Bündel (B1, B2, B3) derart sind, daß:

a) die sich auf jedes Paar von Eintritts − Gliedern beziehenden P Pfade in den L Delta − Netzwerken gleich verteilt sind und die n Pfade auf jedem der L Delta − Netzwerke verlaufen;

b) die sich auf jedes Paar von Ein − Austritts − Gliedern beziehenden und auf einem einzigen Delta − Netzwerk verlaufenden n Pfade an den Eintrittsgliedern hiervon ankommen, die mit einem maxima − len Abstand voneinander gleich S − 1 liegen, d.h., der Anzahl der Stufen der Delta − Netzwerke weniger Eins, wobei die Eintrittsglieder Jedes Delta − Netzwerks von 0 bis N − 1 bezeichnet sind,

c) zwei Pfade, die nicht durch gleichnamige Ausgänge zweier expandierender Elemente und/oder durch gleichlautende Ausgänge zweier Schaltelemente der Verteilerstufe verlaufen, entweder durch zwei unterschiedliche Delta − Netzwerke verlaufen oder die Eingänge des gleichen Delta − Netzwerks erreichen, die ein Abstand gleich S − 1 haben, wobei die Ausgangsglieder jedes expandierenden Elements ebenso wie jedes Schaltelement der Verteilerstufe von 0 bis L − 1 bzw. von 0 bis N − 1 bezeichnet sind;

d) zwei Pfade durch gleichnamige Ausgänge zweier expandierender Elemente und durch gleichna − mige Ausgänge zweier Schaltelemente der Verteilerstufe die Eingänge des gleichen Delta − Net − werks erreichen, die den gleichen Abstand d$_{in}$ − 1 haben, wobei d$_{in}$ der Abstand der Eingangsglieder des NxN − Verbindungsnetzwerks ist, von dem die beiden Pfade ausgehen, wobei die Eingangsglie − der des NxN − Verbindungsnetzwerkes von 0 bis N − 1 bezeichnet sind.

**2.** NxN − Verbindungsnetzwerke nach Anspruch 1,

**dadurch gekennzeichnet, daß** das Zwischenstufen − Bündel B3 die gleichlautenden Ausgänge aller Delta − Netzwerke mit den Eingängen der Konzentrationsstufe verbindet, die gleichnamige Ausgänge wie die Ausgänge der Delta − Netzwerke haben, wobei die Ausgangsglieder jedes Delta − Netzwerkes und des NxN − Verbindungsnetzwerkes von 0 bis N − 1 bezeichnet sind.

EP 0 328 854 B1

3. NxN – Verbindungsnetzwerke nach Anspruch 1,
**dadurch gekennzeichnet, daß**

i) der Abstand zwischen den Ausgangsgliedern eines Delta – Netzwerks und eines NxN – Verbindungsnetzwerks gleich dem Abstand zwischen zwei gleichnamigen Eingangsgliedern ist;

ii) der Abstand zwischen zwei Eingangsgliedern eines NxN – Verbindungsnetzwerks gleich dem Abstand zwischen zwei gleichnamigen Eingangsgliedern des Delta – Netzwerks ist, aus dem das NxN – Verbindungsnetzwerk besteht;

iii) der Abstand zwischen zwei Eingangsgliedern eines Delta – Netzwerks die Position der Stufe bildet, die ein Ausgangsglied hat, das das ersts Ausgangsglied ist, das zwischen zwei nicht getrennten Pfaden aufgeteilt ist, die von den Eingangsgliedern ausgeben, wobei die Stufe des Delta – Netzwerks von 0 bis S – 1 vom Eingang zum Ausgang bezeichnet ist.

4. Verfahren zur Einrichtung von Ein – Ausgangs – Permutationen in einem NxN – Verbindungsnetzwerk nach Anspruch 1 bis 3, bestehend aus der Stufe:

i) den P Mehrfachpfaden zwischen einem Gattungspaar von Eingangsgliedern des NxN – Verbindungsnetzwerks werden P unterschiedliche Farben zugeordnet, so daß die gleiche Farbe allen Pfaden zugeordnet ist, die durch gleichnamige Ausgänge der Expansionselemente und durch gleichnamige Ausgänge der Schaltelemente der Verteilerstufe verlaufen;

ii) sowie bestehend aus den folgenden Stufen:

a) es wird ein Diagramm G durch Zuordnung eines Scheitelpunktes des Diagramms G zu irgendeiner Verbindungsanforderung eines Eingangsglieds zu einem Ausgangsglied des $Nx\,N$ – Verbindungsnetzwerks und durch Anordnung einer Kante zwischen einem Paar von Scheitelpunkten, die Verbindungsanforderungen der Ein – und/oder Ausgangsglieder zugeordnet sind, die einen Abstand von weniger als $\lceil S/2 \rceil$ haben, vorgesehen;

b) das Diagramm G wird in N – Stufen gefärbt, so daß in jeder Stufe ein einziger Scheitelpunkt v gefärbt wird, und einige Scheitelpunkte, die in vorherigen Stufen gefärbt wurden, eine andere Farbe erhalten können; danach wird die Verbindungsanforderung, die jedem Soheitelpunkt v zugeordnet ist, mit dem Pfad eingerichtet, der sich auf die für diesen Scheitelpunkt verwendete Farbe bezieht, und die Verbindungsanforderungen, deren Scheitelpunkte eine andere Farbe erhalten haben, werden mit den Pfaden, die den neuen Farben zugeordnet sind, neu ausgelegt, wobei die einzelne Stufe aus den folgenden Unterstufen besteht:

(b.1) Wenn eine Farbe o unter den P Farben vorhanden ist, die von den Scheitelpunkten, die dem Scheitelpunkt v benachbart sind, nicht verwendet wird, wird diese Farbe dem Scheitelpunkt v zugeordnet, und der Farbgebungsvorgang des Scheitelpunktes v ist beendet;

(b.2) Wenn der Zustand der vorherigen Unterstufe nicht verifiziert wird, werden zwei Farben $c_1$ und $c_2$ gewählt, die nicht verwendet wurden, um die Sätze von Scheitelpunkten w einzufärben, die in den vorherigen Stufen gefärbt wurden und die die Ein – und Ausgangsglieder der zugehörigen Verbindungsanforderungen haben, die mit einem Abstand weniger als $\lceil S/2 \rceil$ von den Ein – und Ausgangsstufen der Verbindungsanforderung angeordnet sind, die, jeweils dem Scheitelpunkt v zugeordnet ist;

(b.3) der Sheitelpunkt v wird mit $c_1$ oder $c_2$ eingefärbt, und die Scheitelpunkte, die zu dem Pfad des Diagramms gehören, das nur aus mit den Farben $c_1$ oder $c_2$ gefärbten Scheitelpunkten gebildet ist und die gleiche Farbe hat, die dem Scheitelpunkt gegeben wurde, wird neu eingefärbt, indem den Scheitelpunkten dieses Pfades die neue Farbe $c_1$ zugeordnet wird, wenn diese Scheitelpunkte mit $c_2$ eingefärbt waren und umgekehrt, d.h., durch Änderung der Diagrammfarbe $c_1$ längs des Pfades nach $c_2$, ohne daß benachbarte Scheitelpunkte mit der gleichen Farbe vorhanden sind.

5. Verfahren nach Anspruch 4,
**gekennzeichnet durch**
die folgenden Stufen:

(f1) Es werden zwei Diagramme g und G entsprechend den folgenden Unterstufen vorgesehen:

(f1.1) Es wird ein Scheitelpunkt des Diagramms g irgendeiner Verbindungsanforderung von einem Eingengsglied zu einem Ausgangsgied des NxN – Verbindungsnetzwerks zugeordnet;

(f1.2) eine Kante zwischen jedem Paar von verbindungsanforderungen zugeordneten Scheitelpunkten wird derart vorgesehen, daß die Summe der Abstände zwischen Eingangsgliedern und der Abstände zwischen Ausgangsgliedern niedriger als S ist;

13

(f1.3) irgendeinem Scheltelpunkt des Diagramms g, das wenigstens P benachbarte Scheitelpunkte hat, wird ein Scheitelpunkt des Diagramms G zugeordnet, das dann ebenfalls der Verbindungs-anrorderung zugeordnet wird, die sich auf den entsprechenden Scheitelpunkt des Diagramms g bezieht; demgemäß wird das Diagramm G aus einer Anzahl von Scheitelpunkten gebildet, die kleiner als die oder gleich der ist, die zu dem Diagramm g gehört;

(f1.4) es wird eine Kante zwischen jedem Paar von Scheitelpunkten des Diagramms G vorgese-hen, das den Verbindungsanforderungen zugeordnet ist, deren Eingänge und/oder Ausgänge auf einem Abstand weniger als $\lceil S/2 \rceil$ liegen;

(f2) die Einfärbung des Diagramms G unter Verwendung der Stufe (b) und ihrer Unterstufen entsprechend Anspruch 4 wird durchgeführt;

(f3) die Einfärbung des Diagramms g entsprechend den folgended Unterstufen wird durchgeführt;

(f3.1) die Farbe der entsprechenden Scheitelpunkte das Diagramms G wird den Scheitelpunkten des Diagramms g gegeben, das wenigstens P benachbarte Scheitelpunkte hat,

(f3.2) den Scheitelpunkten des Diagramms g, das weniger als p benachbarte Scheitelpunkte hat, wird eine Farbe gegeben, die aus den P Gesamtfarben ausgewählt und die nicht von den diesen Scheitelpunkten benachbarten Scheitelpunkten verwendet wird.

6. Verfahren nach Anspruch 4 und 5,
   **dadurch gekennzeichnet, daß** vor Ausführung der Stufe (F2) das Diagramm G durch Entfernen eines Scheitelpunktes reduziert werden kann, der eine Anzahl von benachbarten Scheitelpunkten hat, die geringer als P ist, und der entsprechend der Unterstufe (b.1) des Anspruchs 4 nach Einfärbung des restlichen Diagramms eingefärbt werden soll, wobei die Reduktions-Operation wiederholt wird, bis das restliche Diagramm nur aus Scheitelpunkten mit wenigstens P benachbarten Scheitelpunkten gebildet ist.

7. Verfahren nach Anspruch 4 zum Betreiben von NxN-Verbindungsnetzwerken, bei denen die Schaltelemente eine Anzahl von Ein- und Ausgängen gleich einer Potenz von 2 haben, d.h. eine Größe von $2^q \times 2^q$, wobei q eine ganze Zahl ist,
   **dadurch gekennzeichnet, daß**
   i) die Farbe entsprechend Anspruch 4 durch ein Muster von $q(\lceil S/2 \rceil - 1)$ Bits gegeben ist;
   ii) es die folgenden Stufen umfaßt:

   (k1) es wird eine Farbe in $q(\lceil S/2 \rceil - 1)$-Stufen gebildet, die von 0 bis $q(\lceil S/2 \rceil - 1)$ bezeichnet sind, wobei in jeder Stufe die folgenden Unterstufen vorgesehen sind:

   (k1.1) es wird ein Diagramm gebildet, dessen N-Scheitelpunkte, die N-Verbindungsanfor-derungen eines Eingangs zu einem Ausgang des NxN-Verbindungsnetzwerks zugeordnet sind, am Beginn der Gattungsstufe h mit einem Muster von h Bits und am Ende der Stufe h mit einem Muster von h+1 Bits, bestehend aus dem Muster der h Bits und dem Bit, das für die Farbgebung des Gattungsscheitelpunktes in dieser Stufe verwendet wird, bezeichnet wird;

   (k1.2) es wird eine Kante in der Gattungsstufe h zwischen irgendeinem Paar von Scheitel-punkten vorgesehen, die mit dem gleichen Muster von h Bits bezeichnet und den Verbin-dungsanforderungen zugeordnet sind, deren Ein- und/oder Ausgangsglieder einen binären Abstand gleich h haben;

   (k1.3) die Scheitelpunkte des Diagramms werden eingefärbt, das nur aus einem Satz getrennter geradzahliger Kreise besteht, indem man sich auf diesen geradzahligen Kreisen bewegt und während der Zuordnung der Farbe das Bit 0 in das Bit 1 ändert und zwar entsprechend den folgenden Unterstufen:

   (k1.3.1) es wird entweder das Bit 0 oder das Bit 1 einem nicht gefärbten Scheitelpunkt zugeordnet;

   (k1.3.2) ein Bit, das von dem zuletzt verwendeten Bit verschieden ist, wird einem nicht gefärbten Scheitelpunkt zugeordnet, der, falls vorhanden, dem zuletzt eingefärbten Schei-telpunkt benachbart ist;

   (k1.3.3) die Unterstufe (K1.3.2) wird wiederholt, bis deren Zustand verifiziert ist, worauf die Unterstufe (K1.3.1) wiederholt wird, bis das Diagramm vollständig eingefärbt ist.

8. Verfahren nach Anspruch 7,
   **dadurch gekennzeichnet, daß** der binäre Abstand zwischen zwei Ein- oder Ausgangsgliedern des NxN-Verbindungsnetwerks ist durch den Abstand zwischen zwei Eingangsgliedern gegeben, die den Gliedern eines Delta-Netwerks des gleichen Typs gleichnamig sind, aus dem das Verbindungsnetz-

werk besteht, wobei ein einzelnes $2^q x 2^q$ – Schaltelement durch ein Delta – Netwerk der Größe 2qx2q ersetzt ist, das Schaltelemente der Größe 2x2 hat.

**Revendications**

1. Réseaux d'interconnexion NxN comprenant :

(i) L réseaux delta de dimension NxN en parallèle les uns avec les autres et comportant nxn éléments de commutation, N et n étant le nombre de liaisons d'entrée et de sortie du réseau delta unique et de l'élément de commutation unique, respectivement, et S étages, avec $S = \log_n N$ ;

(ii) un étage dedistribution (DS) composé de NL/n éléments de commutation de dimension nxn ;

(iii) deux étages complémentaires (EXP) et (CNC) remplissant la fonction d'expansion et de concentration, respectivement, et constitués de N éléments de commutation de dimension 1xL et Lx1, respectivement ;

caractérisés en ce que :

des faisceaux inter – étages (B1, B2, B3) connectent l'étage (EXP) et l'étage (DS), ce dernier et les L réseaux delta, et ces derniers et l'étage (CNC), respectivement, de sorte que les $P = L.n$ chemins multiples parmi une paire quelconque de Liaisons d'entrée – sortie du réseau sont équirépartis parmi les réseaux delta, le réseau étant ainsi réarrangeable si $L \geq n \lceil S/2 \rceil - 1$, lesdits faisceaux inter – étages (B1, B2, B3) étant tels que :

a) les P chemins relatifs à chaque paire de liaisons d'entrée – sortie sont équirépartis parmi les L réseaux delta de sorte que n chemins passent sur chacun des L réseaux delta ;

b) les n chemins relatifs à chaque paire de liaisons d'entrée – sortie et passant sur un réseau delta unique pénètrent dans les liaisons d'entrée de ce réseau à une distance maximale les uns des autres égale à $S - 1$, c'est – à – dire au nombre des étages des réseaux delta moins un, les liaisons d'entrée de chaque réseau delta étant repérées de 0 à $N - 1$ ;

c) deux chemins, qui ne passent pas par des sorties homonymes de deux éléments d'expansion et/ou ne passent pas par des sorties homonymes de deux éléments de commutation de l'étage de distribution, traversent deux réseaux delta différents ou atteignent les entrées du même réseau delta qui sont à une distance égale à $S - 1$, les liaisons de sortie de chaque élément d'expansion et de chaque élément de commutation de l'étage de distribution étant repérées de 0 à $L - 1$ et de 0 à $n - 1$, respectivement;et

d) deux chemins passant par des sorties homonymes de deux éléments d'expansion et par des sorties homonymes de deuxéléments de commutation de l'étage de distribution atteignent les entrées du même réseau delta qui sont à une distance $d_{in} - 1$, où $d_{in}$ est la distance des liaisons d'entrée du réseau d'interconnexion NxN d'où partent lesdits deux chemins, les liaisons d'entrée du réseau d'interconnexion NxN étant repérées de 0 à $N - 1$.

2. Réseaux d'interconnexion NxN suivant la revendication 1, caractérisés en ce que le faisceau interéta – ges B3 connecte les sorties homonymes de tous les réseaux delta aux entrées de l'étage de concentration ayant une sortie homonyme comme lesdites sorties des réseaux delta, les liaisons de sortie à la fois de chaque réseau delta et du réseau d'interconnexion NxN étant repérées de 0 à $N - 1$.

3. Réseaux d'interconnexion NxN suivant la revendication 1, caractérisés en ce que :

(i) la distance entre deux liaisons de sortie à la fois d'un réseau delta et d'un réseau d'intercon – nexion NxN est égale à la distance entre deux liaisons d'entrée homonymes aux dites liaisons de sortie ;

(ii) la distance entre deux liaisons d'entrée d'un réseau d'interconnexion NxN est égale à la distance entre deux liaisons d'entrée portant le même nom du réseau delta qui constitue le réseau d'interconnexion NxN ;

(iii) la distance entre deux liaisons d'entrée d'un réseau delta fournit la position de l'étage ayant une liaison de sortie qui est la première liaison de sortie partagée entre deux chemins non disjoints partant desdites liaisons d'entrée, l'étage du réseau delta étant repéré de 0 à $S - 1$, de l'entrée à la sortie.

4. Procédé pour l'établissement de permutations d'entrées – sorties dans un réseau d'interconnexion NxN suivant les revendications 1 à 3, comprenant l'étape de :

(i) à p chemins multiples entre une paire générique de liaisons d'entrée – sortie du réseau d'interconnexion NxN, sont associées P couleurs différentes de sorte que la même couleur est associée à tous les chemins passant à la fois par les sorties homonymes des éléments d'expansion et par les sorties homonymes des éléments de commutation de l'étage de distribution ;

(ii) et comprenant les étapes suivantes :

a) création d'un graphe G par association d'un sommet du graphe G à toute demande de connexion d'une liaison d'entrée vers une liaison de sortie du réseau d'interconnexion NxN et par agencement d'un bord entre toute paire de sommets associés à des demandes de connexion dont les liaisons d'entrée et/ou de sortie sont à une distance inférieure à $\lceil S/2 \rceil$ ;

b) coloration du graphe G en N étapes de sorte que, dans chacune de ces étapes, un seul sommet v est coloré et certains sommets colorés aux étapes précédentes peuvent recevoir une couleur différente, la demande de connexion associée au sommet y étant alors établie avec le chemin relatif à la couleur utilisée pour ledit sommet, et les demandes de connexion dont les sommets ont reçu une couleur différente étant réacheminées suivant les chemins associés aux nouvelles couleurs, l'étape unique comportant les sous-étapes suivantes :

(b.1) s'il y a une couleur c parmi les P couleurs qui n'est pas utilisée par les sommets adjacents au sommet v, une telle couleur est affectée au sommet v et le traitement de coloration du sommet v est terminé ;

(b.2) si la condition de la sous-étape précédente n'est pas vérifiée,on choisit deux couleurs $c_1$ et $c_2$ qui n'ont pas été utilisées pour la coloration des ensembles de sommets w colorés aux étapes précédentes et ayant les liaisons d'entrée et de sortie des demandes de connexion associées situées à une distance inférieure à $\lceil S/2 \rceil$ des liaisons d'entrée et de sortie de la demande de connexion associée au sommet v, respectivement ;

(b.3) coloration du sommet v avec $c_1$ ou $c_2$ et recoloration des sommets appartenant au chemin du graphe constitué seulement des sommets colorés avec $c_1$ ou $c_2$ et partant du sommet qui est adjacent au sommet v, et qui ont la même couleur qui a été donnée audit sommet, par affectation aux sommets dudit chemin de la nouvelle couleur $c_1$ si les dits sommets ont été colorés avec $c_2$ et vice versa, c'est-à-dire par alternance, le long du chemin du graphe, de la couleur $c_1$ à la couleur $c_2$ sans avoir des sommets adjacents de la même couleur.

**5.** Procédé suivant la revendication 4, caractérisé en ce qu'il comprend les étapes suivantes :

(f1) création de deux graphes g et G conformément aux sous-étapes suivantes :

(f1.1) association d'un sommet du graphe g à toute demande de connexion allant d' une liaison d'entrée à une liaison de sortie du réseau d'interconnexion NxN ;

(f1.2) création d'un bord entre chaque paire de sommets associés à des demandes de connexion telles que la somme de la distance entre liaisons d'entrée et de la distance entre liaisons de sortie est inférieure à S ;

(f1.3) association à tout sommet du graphe g, ayant au moins P sommets adjacents, d'un sommet du graphe G qui est alors également associé à la demande de connexion relative au sommet correspondant du graphe g, le graphe G étant par conséquent formé d'un nombre de sommets inférieur ou égal au nombre de ceux qui appartiennent au graphe g ;

(f1.4) création d'un bord entre toute paire de sommets du graphe G associés à des demandes de connexion dont les entrées et/ou les sorties sont à une distance inférieure à $\lceil S/2 \rceil$ ;

(f2) exécution de la coloration du graphe G au moyen de l'étape (b) et de ses sous-étapes suivant la revendication 4 ;

(f3) exécution de la coloration du graphe g conformément aux sous-étapes suivantes :

(f3.1) attribution de la couleur des sommets correspondants du graphe G aux sommets du graphe g ayant au moins P sommets adjacents ; et

(f3.2) attribution, aux sommets du graphe g ayant moins de P sommets adjacents, d'une couleur qui est choisie parmi les P couleurs totales et qui n'est pas utilisée par les sommets adjacents auxdits sommets.

**6.** Procédé suivant les revendications 4 et 5, caractérisé en ce que, avant d'effectuer l'étape (f2), on peut réduire le graphe G par élimination d'un sommet qui a un nombre de sommets adjacents inférieur à P et qui va être coloré conformément à la sous-étape (b.1) de la revendication 4, après la coloration du graphe restant, ladite opération de réduction étant répétée jusqu'à ce que ledit graphe restant soit formé seulement de sommets ayant au moins P sommets adjacents.

16

**7.** Procédé suivant la revendication 4, opérant sur des réseaux d'interconnexion NxN dans lesquels les éléments de commutation ont un nombre d'entrées et de sorties égal à une puissance de 2, c'est – à – dire une dimension $2^q$x$2^q$ avec q étant un nombre entier, caractérisé en ce que :

(i) la couleur suivant la revendication 4 est donnée par une configuration de $q(\lceil S/2 \rceil - 1)$ bits ;

(ii)il comprend les étapes suivantes :

(k1) établissement d'une couleur en $q(\lceil S/2 \rceil - 1)$étapes repérées de 0 à $q(\lceil S/2 \rceil - 1)$, les sous – étapes suivantes étant prévues dans chacune de ces étapes:

(k1.1) formation d'un graphe dont les N sommets associés à N demandes de connexion d'une entrée vers une sortie du réseau d'interconnexion NxN sont étiquetés, au début de l'étape générique h,avec une configuration de h bits et à la fin de l'étape h avec une configuration de h + 1 bits composée de ladite configuration de h bits et du bit utilisé pour la coloration du sommet générique à ladite étape ;

(k1.2) création d'un bord, à l'étape générique h, entre une paire quelconque de sommets étiquetés avec la même configuration de h bits et associés à des demandes de connexion dont les liaisons d'entrée et/ou de sortie sont à une distance binaire égale à h ;

(k1.3) coloration des sommets du graphe, composé seulement d'un ensemble de cycles pairs disjoints, par déplacement lors des dits cycles pairs et par alternance du bit 0 au bit 1, pendant l'affectation de la couleur, et en particulier conformément aux sous – étapes suivantes :

(k1.3.1) affectation du bit 0 ou du bit 1 à un sommet non coloré ;

(k1.3.2) affectation d'un bit différent du dernier bit utilisé à un sommet non coloré, s'il en existe, adjacent au dernier sommet coloré ; et

(k1.3.3) répétition de la sous – étape (k1.3.2) jusqu'à ce que sa condition soit vérifiée, puis répétition de la sous – étape (k1.3.1) jusqu'à ce que le graphe soit entièrement coloré.

**8.** Procédé suivant la revendication 7, caractérisé en ce que la distance binaire entre deux liaisons d'entrée ou de sortie du réseau d'interconnexion NxN est donnée par la distance entre deux liaisons d'entrée, homonymes desdites liaisons, d'un réseau delta du même type dont le réseau d'intercon – nexion est composé, l'élément de commutation $2^q$x$2^q$ unique étant remplacé par un réseau delta de dimension $2^q$x$2^q$ ayant des éléments de commutation de dimension 2x2.

$d_{in}(4,7)=1$

$d_{out}(0,1)=0$

$s=S-d_{out}(0,1)-1=3$

$s=d_{in}(4,7)=1$

**Fig.1**

**Fig.2**

# Fig. 3

**Fig. 4**

**Fig. 5**

**Fig. 6**

**Fig. 7**

Fig. 8

Fig. 9